# EUROPÄISCHE PATENTSCHRIFT

(11) **EP 2 870 336 B1**
(45) Veröffentlichungstag und Bekanntmachung des Hinweises auf die Patenterteilung: **21.09.2016**
(21) Anmeldenummer: 13734121.0
(22) Anmeldetag: 05.07.2013
(51) Int. Cl.: F02B 29/04, F28D 1/02, F28F 9/02, F28D 7/16

(54) **WÄRMEÜBERTRAGER**
HEAT EXCHANGER
ÉCHANGEUR DE CHALEUR

(30) Priorität: 06.07.2012 DE 102012211857
(43) Veröffentlichungstag der Anmeldung: 13.05.2015
(73) Patentinhaber: MAHLE Behr GmbH & Co. KG, 70469 Stuttgart (DE)
(72) Erfinder: IGNJATOVIC, Spasoje, 75428 Illingen (DE); KANDLEN, Juri, 72336 Balingen (DE); RICHTER, Jens, 71723 Großbottwar (DE)
(74) Vertreter: Grauel, Andreas
(86) Internationale Anmeldenummer: PCT/EP2013/064318
(87) Internationale Veröffentlichungsnummer: WO 2014/006213

(56) Entgegenhaltungen:
- WO-A1-2011/061311
- DE-A1-102007 049 665
- DE-A1-102008 018 594
- US-A1- 2008 121 384
- US-A1- 2011 168 370

## Beschreibung

### Technisches Gebiet

Die Erfindung betrifft einen Wärmeübertrager, insbesondere einen Ladeluftkühler zur Kühlung von Ladeluft oder einen Abgaskühler zum Kühlen von Abgasen von Brennkraftmaschinen, insbesondere für Kraftfahrzeuge.

### Stand der Technik

Bei Kraftfahrzeugen wird bei Brennkraftmaschinen eine Aufladung der Verbrennungsluft seit längerem eingesetzt. Durch die Aufladung beispielsweise mittels Turbolader oder Kompressoren wird die Ladeluft durch die Kompression allerdings stark erhitzt, so dass dies nachteilig für die Einspeisung in den Verbrennungsmotor und die dortige Verbrennung ist. Zur Kühlung der Ladeluft sind Ladeluftkühler bekannt, die als Luft-Luft-Wärmeübertrager in der Fahrzeugfront eingebaut sind. Dazu ist eine Verschlauchung von dem Lader zum Wärmeübertrager und von dem Wärmeübertrager zur Brennkraftmaschine notwendig.

Daneben sind auch kühlmittelgekühlte Ladeluftkühler bekannt, die als Luft-Kühlmittel-Wärmeübertrager mit regulärem Kühlmittel der Brennkraftmaschine oder mit einem gesonderten Niedertemperaturkühlmittel mit gegenüber dem Motorkühlmittel reduzierten Temperatur gespeist werden. Alternativ kann auch mit einem Kältemittel gekühlt werden. Diese Art der Ladeluftkühler sind nicht speziell in der Fahrzeugfront zu verbauen, sondern lassen sich beispielsweise auch motornah im Motorraum verbauen.

Durch die Luft-Kühlmittel-Kühlweise kann der Wärmeübertrager auch kompakt gebaut werden, was seine Einsetzbarkeit erhöht und seine Platzierung erleichtert.

Eine solche kompakte Bauweise wird beispielsweise durch die EP 1 707 911 A1 bekannt. Diese Bauweise hat jedoch den Nachteil, dass sowohl die Rohr-Rohrboden-Baugruppe als auch das diese umgebende Gehäuse aus Metall hergestellt und gelötet und auch geschweißt ist, während die einströmseitigen und abströmseitigen Sammelkästen aus Kunststoff hergestellt und mit einer zwischen gelegten Dichtung mittels einer Bördelung mit dem Rohrboden aus Metall verbunden sind.

Dies bringt den Nachteil mit sich, dass an einem Wärmeübertrager eine Vielzahl von verschiedenen Fügeoperationen notwendig sind, die auf jeweils unterschiedlichen Vorrichtungen durchführbar sind und daher hohe Investitionen bedürfen und daher die Fertigung relativ aufwändig und teuer ist.

Weitere Wärmeübertrager in kompakter Bauweise sind aus US 2011/0168370 A1 und DE 10 2008 018 594 A1 bekannt.

### Darstellung der Erfindung, Aufgabe, Lösung, Vorteile

Es ist die Aufgabe der Erfindung, einen Wärmeübertrager der eingangs genannten Art zu schaffen, der einfach und kostengünstig herstellbar ist.

Dies wird mit den Merkmalen von Anspruch 1 erreicht.

Ein Ausführungsbeispiel der Erfindung sieht einen Wärmeübertrager, wie insbesondere einen Ladeluftkühler oder Abgaskühler, mit einer Rohr-Rohrboden-Baugruppe, bei welcher Rohre mit ihren gegenüberliegenden Rohrenden in Öffnungen zweier gegenüberliegender Rohrböden abgedichtet eingesetzt sind, wobei zwischen den beiden Rohrböden zumindest ein Teilbereich eines Gehäuses angeordnet ist, welches die Rohre der Baugruppe umgreift und nach außen abdichtet, wobei die beiden Rohrböden zwei parallel zueinander verlaufende und jeweils an einen Endbereich der Rohre anschließende Seiten aufweisen, an denen auf einer dem Gehäuse zwischen den Rohrböden gegenüberliegenden Seite eines Rohrbodens jeweils ein weiteres Gehäuseteil angeordnet ist, welches mit dem Gehäuse zwischen den Rohrböden abgedichtet verbunden ist, wobei an zumindest einem der Rohrböden und eine Dichtung zwischen dem Gehäuse und dem diesem Rohrboden und zwischen diesem Rohrboden und dem weiteren Gehäuseteil, das an diesem Rohrboden angeordnet ist, und dem Rohrboden abdichtend angeordnet ist. Dadurch kann erreicht werden, dass eine einfach lötbare Rohr-Rohrboden-Baugruppe hergestellt werden kann, die einfach mit kostengünstigen Gehäuseteilen bestückt werden kann. Durch die einfache Gestaltung einer Rohr-Rohrboden-Baugruppe kann beim Löten die Durchlaufzeit durch einen Lötofen reduziert werden, weil keine zusätzlichen großen Massen mitgelötet werden müssen, die die Aufheizdauer der Teile im Lötofen erhöhen.

Vorteilhaft ist es weiterhin, wenn auf beiden Seiten der Baugruppe an den beiden der Baugruppe gegenüberliegenden Seiten der beiden Rohrböden jeweils ein Gehäuseteil angeordnet ist, welches mit dem Gehäuse zwischen den Rohrböden abgedichtet verbunden ist und eine Dichtung zwischen dem Gehäuse und dem Rohrboden und/oder dem Gehäuseteil und dem Rohrboden abdichtend angeordnet ist. Dadurch wird erreicht, dass ein Gehäuse sich derart um die Rohr-Rohrboden-Baugruppe schließt, dass die Baugruppe abgedichtet aufgenommen und umschlossen ist. Dadurch kann erreicht werden, dass eine einfach lötbare Rohr-Rohrboden-Baugruppe hergestellt werden kann, die einfach mit kostengünstigen Gehäuseteilen bestückt werden kann. Durch die einfache Gestaltung einer Rohr-Rohrboden-Baugruppe kann beim Löten die Durchlaufzeit durch einen Lötofen reduziert werden, weil keine zusätzlichen großen Massen mitgelötet werden müssen, die die Aufheizdauer der Teile im Lötofen erhöhen.

Auch ist es vorteilhaft, wenn das Gehäuse zwischen den beiden Rohrböden aus zumindest zwei Gehäuseelementen besteht, die miteinander fluiddicht verbunden sind. Dies vereinfacht den Aufbau, wobei es besonders vorteilhaft ist, wenn die beiden Teile gleich gestaltet sind.

Auch ist es zweckmäßig, wenn das Gehäuse aus zwei Schalen besteht, die die Baugruppe jeweils zumindest teilweise umgreifen und die miteinander fluiddicht verbunden sind. Dabei kann es zweckmäßig sein, wenn die beiden Schalen etwa u-förmig mit einer Deckplatte und zwei Seitenplatten besteht, die so aufeinander gesetzt werden, dass die Seitenplatten aneinander anliegen und miteinander dicht verbunden sind. So können ähnliche Gestaltungen realisiert werden, wobei es zweckmäßig ist, wenn der Zu- und der Abführstutzen für das Kühlmittel gemeinsam an einer Schale oder verteilt an beiden Schalen so angeordnet sind, dass jeweils ein Stutzen an einer Schal vorgesehen ist.

Vorteilhaft ist es, wenn die Gehäuseelemente des Gehäuses aus Metall oder Kunststoff bestehen und miteinander insbesondere durch Schweißen oder Kleben oder Löten verbunden sind. Dabei ist die Ausbildung aus Kunststoff, wie beispielsweise aus Polyamid o.ä. besonders bevorzugt.

Auch ist es zweckmäßig, wenn das zumindest eine Gehäuseteil oder die Gehäuseteile aus Metall oder Kunststoff bestehen und durch Schweißen oder Kleben oder Löten mit dem Gehäuse verbunden sind. Hierzu ist ebenso die Ausbildung aus Kunststoff besonders vorteilhaft.

Auch ist es vorteilhaft, wenn das Gehäuse an zumindest einem lateralen Ende gegenüber dem Rohrboden einen Flansch aufweist, welcher den Rohrboden seitlich überragt, wobei auch das zumindest eine Gehäuseteil an seinem einen lateralen Ende einen Flansch aufweist, welcher den Rohrboden seitlich überragt, wobei das Gehäuse und das Gehäuseteil im Bereich der überragenden Flansche derart abgedichtet miteinander verbunden sind, so dass der Rohrboden von dem Gehäuse und dem Gehäuseteil aufgenommen ist.

Weiterhin ist es zweckmäßig, wenn eine Dichtung zwischen dem Flansch des Gehäuses und dem Rohrboden angeordnet ist zur Abdichtung des Innenraums des Gehäuses gegenüber dem Innenraum des Gehäuseteils. Dadurch kann eine sichere Abdichtung vorgesehen werden, was bevorzugt ist.

Auch ist es zweckmäßig, wenn eine Dichtung zwischen dem Flansch des weiteren Gehäuseteils und dem Rohrboden angeordnet ist zur Abdichtung des Innenraums des Gehäuses gegenüber dem Innenraum des weiteren Gehäuseteils.

Weiterhin ist es vorteilhaft, wenn zwei Dichtungen beiderseits des Rohrbodens angeordnet sind.

Auch ist es vorteilhaft, wenn zwischen den Rohren der Baugruppe eine Aufnahme zum Durchgreifen zumindest eines Verbindungselements ist, welches oder welche zumindest zwei Gehäuseelemente miteinander verbindet bzw. verbinden.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine schematische Ansicht eines nichterfindungsgemäßen Wärmeübertragers mit einer Rohr-Rohrboden-Baugruppe und einem Gehäuse,
- Fig. 2: eine schematische Ansicht eines Wärmeübertragers mit einer Rohr-Rohrboden-Baugruppe und einem Gehäuse,
- Fig. 3: eine schematische Ansicht eines Wärmeübertragers mit einer Rohr-Rohrboden-Baugruppe und einem Gehäuse,
- Fig. 4: eine perspektivische Ansicht einer Rohr-Rohrboden-Baugruppe,
- Fig. 5: Teilansichten der Rohr-Rohrboden-Baugruppe in Seitenansicht von vorn, von der Seite und von oben,
- Fig. 6: eine Ansicht eines Gehäuseteils von oben,
- Fig. 7: eine Ansicht des Gehäuseteils der Figur 6 von der Unterseite,
- Fig. 8: eine Ansicht zweier Gehäuseteile und einer Rohr-Rohrboden-Baueinheit vor dem Zusammenbau,
- Fig. 9: eine Ansicht zweier Gehäuseteile und einer Rohr-Rohrboden-Baueinheit nach dem Zusammenbau,
- Fig. 10: eine Ansicht einer nicht-erfindungsgemäßen Rohr-Rohrboden-Baueinheit mit Gehäuse und mit weiteren Gehäuseteilen,
- Fig. 11: eine Ansicht eines nicht-erfindungsgemäßen Wärmeübertragers,
- Fig. 12: ein Schnitt durch den Wärmeübertrager der Fig. 11 gemäß Linie A-A,
- Fig. 13: ein Schnitt durch den Wärmeübertrager der Fig. 11 gemäß Linie B-B,
- Fig. 14: ein Detail der Fig. 13 vergrößert,
- Fig. 15: ein Schnitt durch den Wärmeübertrager der Fig. 11 gemäß Linie C-C, und
- Fig. 16: ein Schnitt durch eine alternative Gestaltung eines nichterfindungsgemäßen Wärmeübertragers.

### Bevorzugte Ausführung der Erfindung

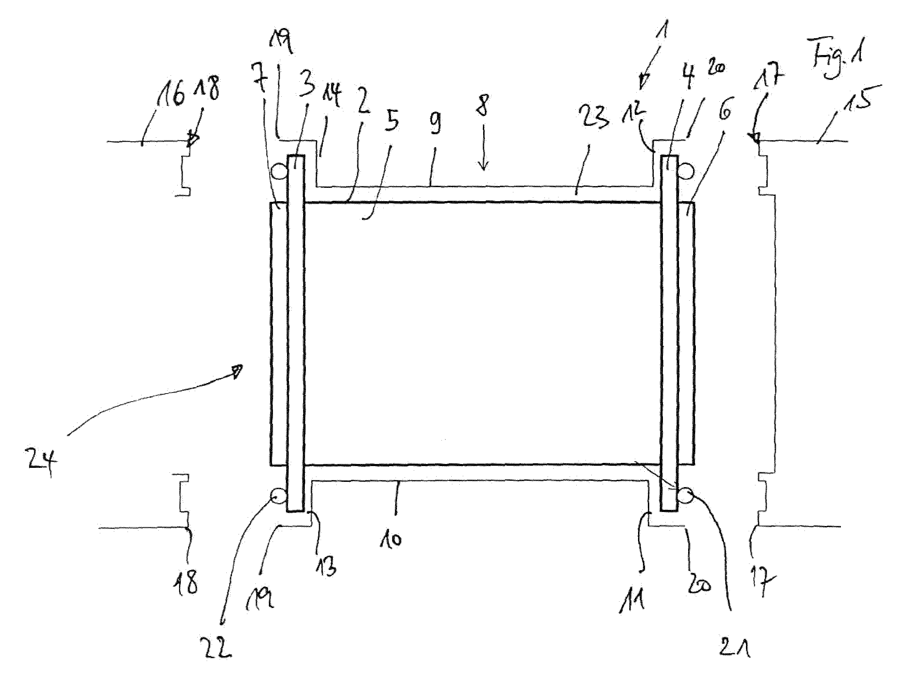

Die Figur 1 zeigt schematisch einen Teil eines nicht-erfindungsgemäßen Wärmeübertragers 1 mit einer Rohr-Rohrboden-Baugruppe 2. Die Rohr-Rohrboden-Baugruppe 2 ist gebildet durch einen ersten Rohrboden 3, einen zweiten Rohrboden 4 und durch eine Anzahl von Rohren 5, die in Öffnungen in den Rohrböden mit ihren Endseiten 6, 7 eingesetzt sind und dort fluiddicht verbunden sind. Die Rohre 5 können vorzugsweise mit ihren Endbereichen 6, 7 in die Öffnungen der Rohrböden 3, 4 eingesetzt und mit diesen verlötet sein. Andere Verbindungsmöglichkeiten sind beispielsweise das Schweißen oder das Kleben.

Wie zu erkennen ist, ist zwischen den Rohrböden 3, 4 ein Gehäuse 8 vorgesehen, das bevorzugt aus zwei Gehäuseschalen 9, 10 als Gehäuseelemente zusammengesetzt ist. Das Gehäuse weist dazu einen Flansch 11, 12,13 und 14 an seinen beiden Endbereichen auf, welcher den Rohrboden außen übergreift.

Die Rohrböden 3, 4 weisen zwei parallel zueinander verlaufende und jeweils an einen Endbereich 6, 7 der Rohre 5 anschließende flächige Seiten auf, in welchen bevorzugt die Öffnungen zum Durchgreifen der Rohre eingebracht sind. Auf den gegenüberliegenden Seiten der Rohrböden 3, 4, also auf den sich an einen Endbereich 6, 7 der Rohre 5 anschließende Seiten, relativ zu den Seiten der Rohrböden 3, 4, die dem Gehäuse 8 benachbart sind, sind weitere Gehäuseteile 15, 16 vorgesehen, die mit dem Gehäuse 8 beziehungsweise mit den Gehäuseelementen 9 oder 10 des Gehäuses 8, dass zwischen den beiden Rohrböden 3, 4 angeordnet ist, verbunden sind. Dazu weisen die Gehäuseteile 15, 16 einen Verbindungsbereich 17, 18 auf, der mit dem Verbindungsbereich 19, 20 des Gehäuses 8 mit den Gehäuseelementen 9, 10 verbindbar ist. Zwischen dem Gehäuse und dem jeweiligen Rohrboden 3, 4 ist weiterhin jeweils eine Dichtung 21, 22 vorgesehen, die umlaufend um den Rohrboden laufend angeordnet ist. Durch die Verbindung der Gehäuseelemente bzw. Gehäuseteile 16, 9, 10 beziehungsweise 15, 9, 10 wird die Dichtung 21 beziehungsweise 22 gegen das Gehäuse 15, 16 und den Rohrboden 3, 4 beaufschlagt, so dass eine Medientrennung zwischen dem Durchströmungsbereich 23 für ein Kühlmittel und 24 für ein rohrdurchströmendes Medium gegeben ist.

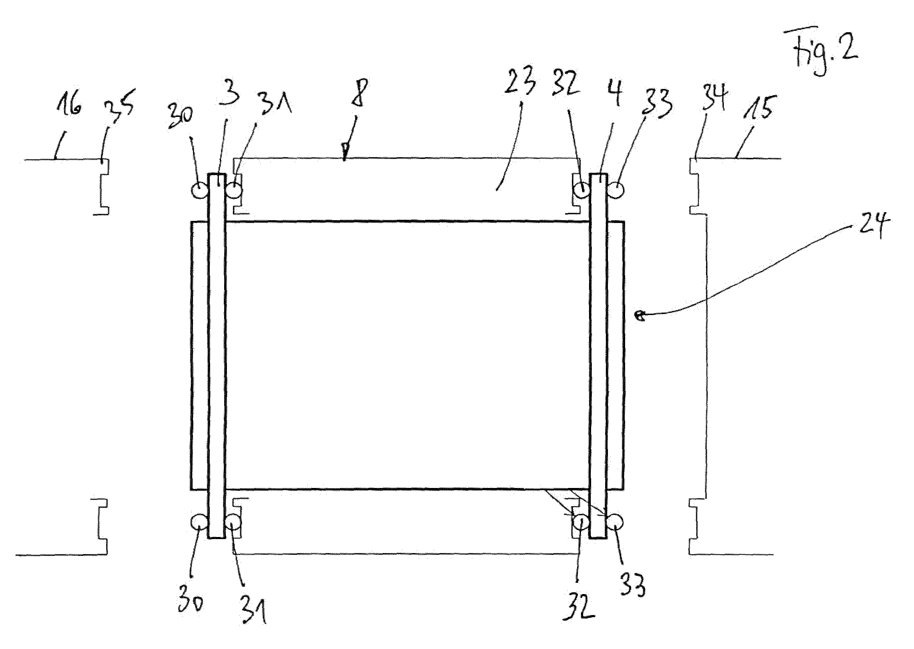

Die Figur 2 zeigt in einem erfindungsgemäßen Ausführungsbeispiel eine Alternative zur Darstellung der Figur 1, wobei im Ausführungsbeispiel der Figur 2 auf beiden Seiten der Rohrböden 3, 4 Dichtungen 30, 31, 32, 33 vorgesehen sind, wobei die Dichtung 30 zwischen dem Rohrboden 3 und dem Gehäuse 16 abdichtet, die Dichtung 31 zwischen dem Rohrboden 3 und dem Gehäuse 8, die

Dichtung 32 zwischen dem Gehäuse 8 und dem Rohrboden 4 und die Dichtung 32 zwischen dem Rohrboden 4 und dem Gehäuse 15. Die beiden Gehäuseteile 15, 16 werden so mit dem Gehäuse 8 verbunden, das die Dichtungen gegen die Rohrböden beaufschlagt werden und die Medientrennung entsprechend realisiert wird.

Dabei kann der Flansch 34, 35 den Rohrboden 3, 4 außen umgreifen, so dass eine Verbindung zwischen den Gehäuseteilen 15, 16 mit dem Gehäuse 8 realisiert werden kann, so dass die Dichtungen jeweils gegen den Rohrboden beaufschlagt werden, um die Medientrennung zwischen den Bereichen der Kühlmitteldurchströmung 23 und der Mediendurchströmung 24 durch die Rohre zu erreichen.

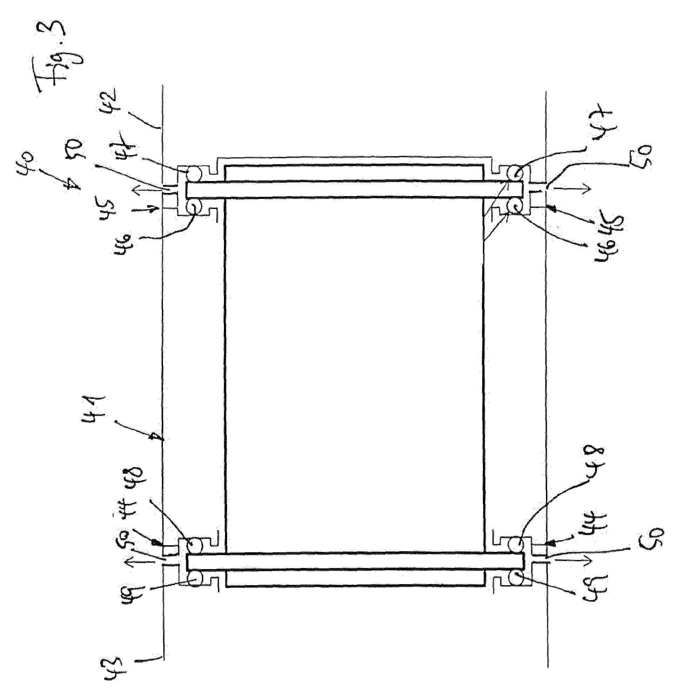

Die Figur 3 zeigt eine weitere alternative Gestaltung eines Wärmeübertragers 40, bei dem das Gehäuse 41 mit den Gehäuseteilen 42, 43 im Bereich der Verbindung 44, 45 verbunden ist, wobei weiterhin im Bereich der Anordnung der Dichtungen 46, 47, 48, 49 im Gehäuse eine Bohrung 50 vorgesehen ist, die als Drainageöffnung dienen kann, um ein Medium, das an der Dichtung 46 bis 49 vorbeiströmen könnte, nicht in den anderen Medienstrom gelangt, sondern aus dem Gehäuse des Wärmeübertragers austreten kann.

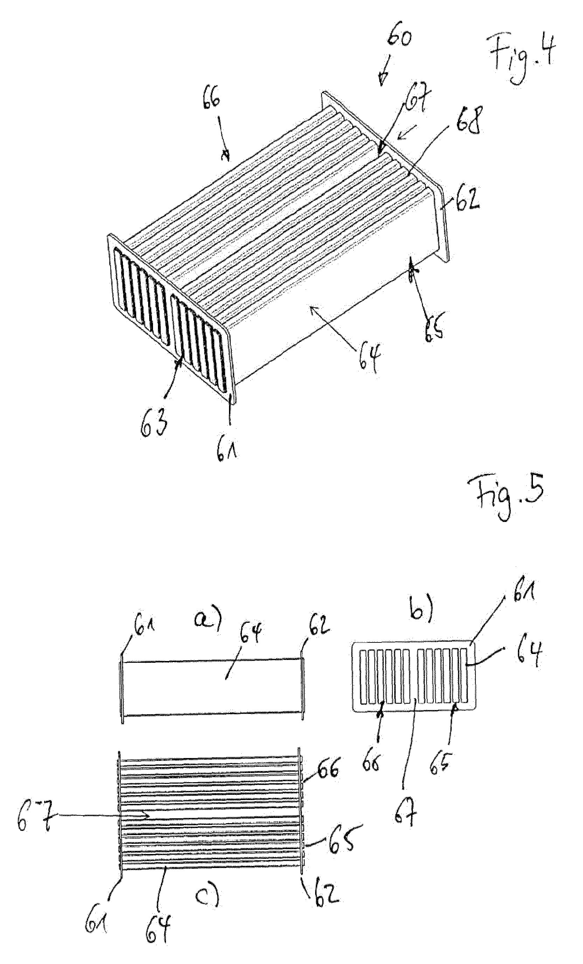

Die Figur 4 zeigt eine perspektivische Darstellung einer Rohr-Rohrboden-Baugruppe 60, die zwei Rohrböden 61, 62 beabstandet aufweist, die mit Öffnungen 63 versehen sind. Zwischen den beiden Rohrböden 61, 62 sind Rohre 64 in einer Reihe nebeneinander angeordnet, wobei die Rohre 64 endseitig jeweils in den Öffnungen 63 der Rohrböden 61, 62 abgedichtet aufgenommen sind. Dazu können die Rohrböden 61, 62 um die Öffnungen herum auch Durchzüge aufweisen, welche der Verlötung der Rohrenden dienen können.

Wie in Figur 4 zu erkennen ist, sind die Rohre 64 in zwei Gruppen 65, 66 angeordnet, wobei zwischen den beiden Rohrgruppen ein Abstand gehalten ist, so dass ein Raumbereich 67 gebildet ist, der größer ist als der normale Abstand 68 zwischen den Rohren einer Gruppe. In der Figur 4 ist nicht zu erkennen, dass zwischen den Rohren auch Turbulenzeinlagen vorgesehen sein können. Diese sind bevorzugt zwischen zwei benachbarten Rohren einer Gruppe angeordnet, wobei der Raumbereich 67 frei von Turbulenzeinlagen ist.

Die Figur 5 mit den Teilfiguren a, b und c zeigt die Rohr-Rohrboden-Baugruppe 60 in einer Seitenansicht, in einer Ansicht von vorne, auf die Öffnungen der Rohrböden und in einer Ansicht von oben.

In der Teilfigur 5a ist ein Rohr 64 zwischen zwei Rohrböden 61, 62 zu erkennen, wobei die Enden der Rohre geringfügig über den Rohrboden 61, 62 hinausstehen.

Die Teilfigur 5b zeigt einen Rohrboden 61 mit Rohren 64 in einer frontalen Ansicht, wobei die Gruppe der Rohre 65 und die Gruppe der Rohre 66 mit dem Spalt 67 zwischen diesen beiden Gruppen deutlich zu erkennen ist.

Die Teilfigur 5c zeigt die Rohr-Rohrboden-Baugruppe in einer Ansicht von oben. Man erkennt die beiden Rohrböden 61, 62 und die Rohre 64 die in zwei Gruppen 65, 66 angeordnet sind mit einem Spalt 67 zwischen den beiden Gruppen.

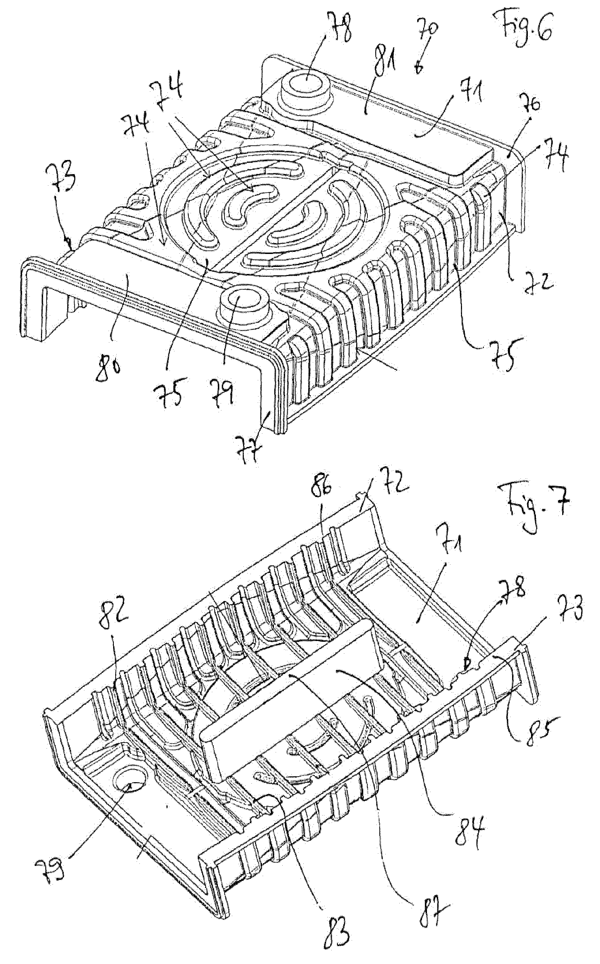

Die Figur 6 zeigt eine dreidimensionale Ansicht eines Gehäuseelements 70 wie es zwischen den beiden Rohrböden angeordnet wird, um die Rohre nach außen abzuschließen. Die Figur 6 zeigt dieses Gehäuseelement 70 in einer Ansicht von oben und die Figur 7 zeigt das Gehäuseelement in einer Ansicht von innen.

Das Gehäuseelement 70 ist mit einer u-förmigen Gestalt gebildet und weist eine obere Wandung 71 und zwei seitlichen Wandungen 72, 73 auf. Die beiden seitlichen Wandungen 72, 73 sind im Wesentlichen rechtwinklig zur Wandung 71 ausgebildet. Wie zu erkennen ist, ist in den Wandungen 72, 73 eine Struktur mit Rippen 74 und Nuten 75 eingebracht, was der Versteifung des Gehäuseelements 70 dient. Dabei sind zentral im Bereich der Fläche 71 ringförmige Nuten 75 vorgesehen, die durch ringförmige Vorsprünge 74 voneinander getrennt werden.

Im Randbereich sind die Vorsprünge 74 und Nuten gerade und nehmen den Übergang der Fläche 71 zu den Seitenwänden 72, 73 knieförmig ein und erstrecken sich im Wesentlichen an gesamten Seitenwänden 72, 73.

An den Endbereichen des Gehäuseelements ist der jeweilige Flansch 76, 77 zu erkennen, mittels welchem das Bauteil an weiteren Gehäuseteilen anliegen und den Rohrboden übergreifen kann. Auch kann ein Teil des Flansches 76, 77 dazu verwendet werden, eine Dichtung zwischen sich und der Rohrbodenwandung aufzunehmen um eine Abdichtung zwischen diesen Bauteilen dadurch zu gewährleisten. Ein Teil des Flansches übergreift vorzugsweise den Rohrboden außen und wird mit einem weiteren Gehäuseteil verbunden.

Weiterhin ist zu erkennen, dass Anschlussstutzen 78, 79 mit Verteilräumen 80, 81 mit in Verbindung stehen. Das Fluid zur Kühlung eines Mediums, das durch die Rohre der Rohr-Rohrboden-Baugruppe strömt, kann durch den Stutzen 78 beispielsweise in das Wärmeübertragergehäuse eingelassen werden, es umströmt die Rohre der Rohr-Rohrboden-Baugruppe und kann am Stutzen 79 wieder aus dem Wärmeübertrager austreten.

Die Verteilkanäle 80, 82 dienen dazu, das Kühlmittel über die Breite des Wärmetauschers besser zu verteilen, bevor es die Rohr-Rohrboden-Baugruppe umströmt. Die Figur 7 zeigt das Gehäuseelement 70 von unten, wobei weiterhin auf der Innenseite Stege 82 und 83 vorgesehen sind, zur Umlenkung des Fluides oder als Fluidsperre, so dass das Fluid nicht den kürzesten Weg zwischen den Rohstutzen 79, 78 nimmt, sondern die Rohre der Rohr-Rohrboden-Baugruppe umströmt. Dazu sind die Stege 82, 83 bevorzugt in einer Ebene senkrecht zur Längsrichtung der Rohre ausgerichtet.

Weiterhin weist das Gehäuseelement in einen Vorsprung 84 auf, welcher in Längsrichtung der Rohre senkrecht zur Ebene der Fläche 71 des Gehäuseelements ausgestaltet ist. Der Vorsprung 84 ist etwa quaderförmig ausgebildet und weist eine Höhe auf, die etwa der Höhe der Seitenwand 72 entspricht. Werden zwei solche Gehäuseelemente mit den Flächen 85, 86 aufeinander gelegt, so umgreifen die beiden Gehäuseelemente 70 die Rohr-Rohrböden-Baugruppe und die Flächen 85 und 86 berühren sich, wobei auch die Stirnfläche 87 des Vorsprungs 84 einander berühren. Zur Verbindung zweier solcher Gehäuseelemente 70 kann zwischen den Flächen 86, 85 und 87 vorzugsweise eine Schweißverbindung hergestellt werden. Es können aber auch andere Verbindungsprozesse wie beispielsweise Kleben verwendet werden.

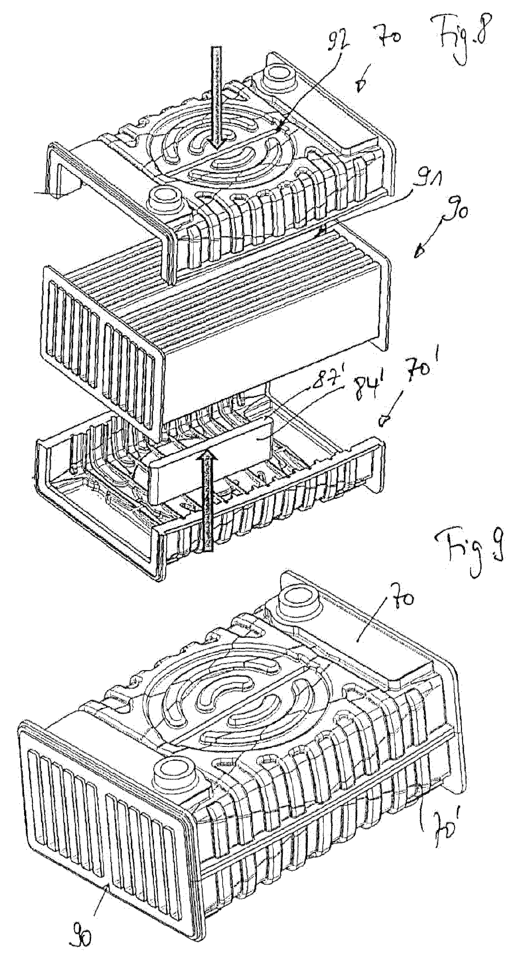

Die Figur 8 zeigt, wie zwei Gehäuseelemente 70 verwendet werden, um eine Rohr-Rohrboden-Baugruppe 90 zu umgreifen. Dabei wird ein Gehäuseelement 70 von oben und ein Gehäuseelement 70' von unten auf die Rohr-Rohrboden-Baugruppe 90 aufgesetzt, derart, dass die Vorsprünge 84 und 84' in die beabstandete Freisparung 91 eingreifen.

Im Schnitt betrachtet ist der Vorsprung 84 beziehungsweise 84' doppelwandig ausgebildet und weist eine zentrale Nut 92 auf, was dazu dient, die beiden Stirnflächen 87 beziehungsweise 87' miteinander zu verbinden.

Die Figur 9 zeigt die Rohr-Rohrboden-Baugruppe mit den die Rohre umgebenden Gehäuseelemente 70 und 70'. Dabei sind die Rohre im Bereich der Flächen 85, 86 und 87 gemäß den Figuren 6 bis 8 miteinander verbunden, wie vorteilhaft miteinander verschweißt oder verklebt.

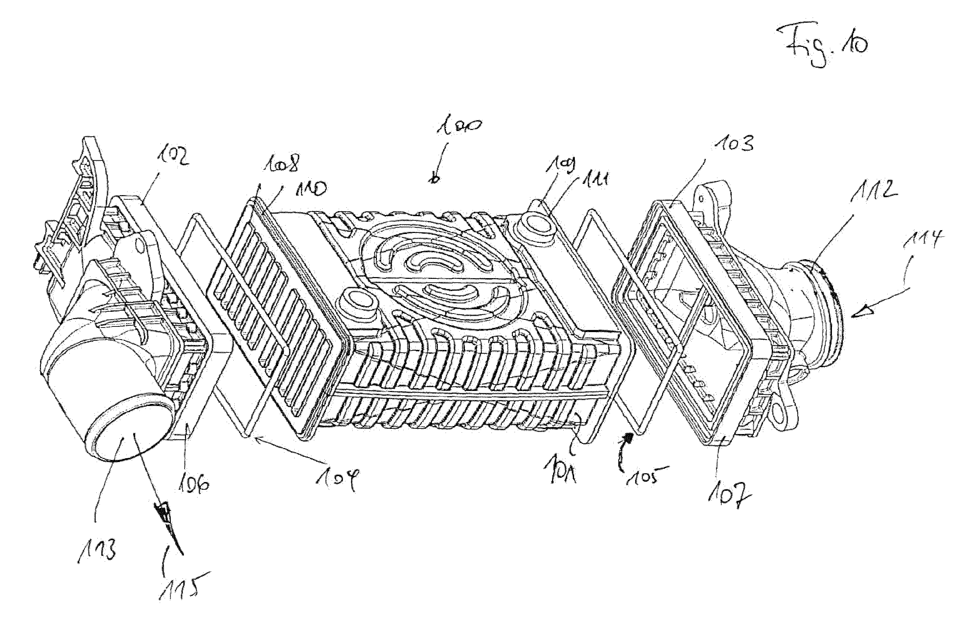

Die Figur 10 zeigt eine Ansicht einer nicht-erfindungsgemäßen Rohr-Rohrboden-Baueinheit mit Gehäuse
100, wobei auf die Rohrböden auf dem Gehäuse 101 abgewandten Seite weitere Gehäuseteile 102, 103 und der Zwischenlage 104, 105 aufgesetzt wird. So wird eine rechteckige Dichtung zwischen den Flansch 106, 107 und den Rohrboden 108, 109 beziehungsweise den Flansch 110, 111 des Gehäuses 101, welcher den Rohrboden überragt, angeordnet. Anschließend wird das Gehäuseteil 102 mit einem Flansch 106 mit dem Flansch 110 des Gehäuses 101 verbunden und das Gehäuseteil 103 mit dem Flansch 107 mit dem Flansch 111 des Gehäuses 101 verbunden. Dabei wird die Dichtung 104, 105 verpresst und der kühlmitteldurchströmte Bereich des Wärmeübertragers wird dadurch von dem das Medium, welches durch die Rohre strömt, durchströmten Bereich abgedichtet und getrennt.

Weiterhin ist zu erkennen, dass die Gehäuseteile 102,103 mit Anschlussstutzen 112, 113 ausgebildet sind, so dass beispielsweise in den Stutzen 112 ein Medium gemäß 114 einströmt und aus dem Stutzen 113 gemäß Pfeil 115 wieder ausströmen kann.

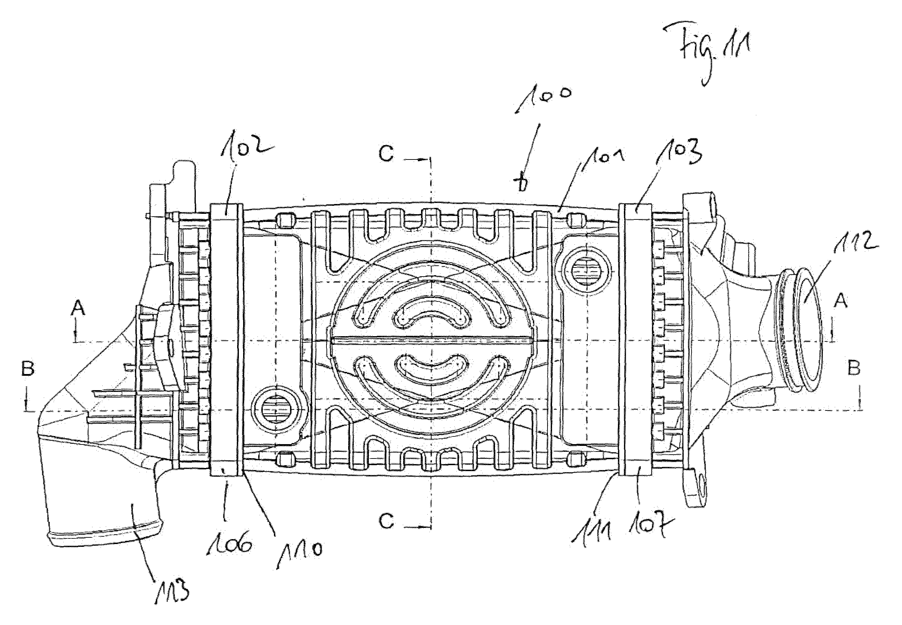

Die Figur 11 zeigt die zusammengebaute Wärmeübertragereinheit 100 mit dem Gehäuse 101 und den Gehäuseteilen 102, 103, die mittels ihrer Flansche 106, 107 mit dem Flansch 110, 111 des Gehäuses 102 abgedichtet verbunden sind.

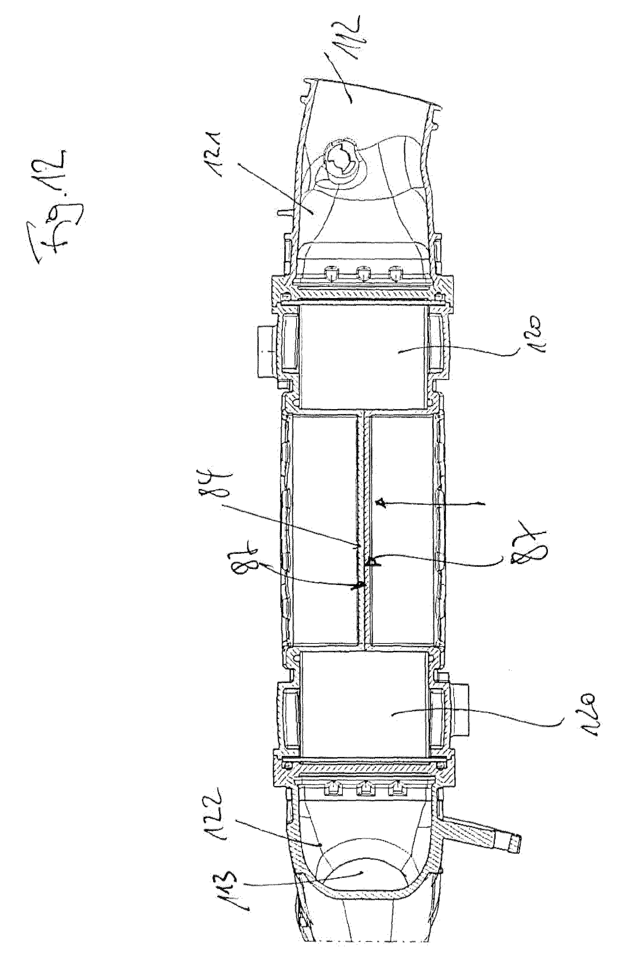

Die Figur 12 zeigt einen Schnitt der Figur 11 entlang der Linie A-A. Man erkennt die Stege, die in der Figur 7 mit Bezugszeichen 84 versehen sind, als mittlere Bereiche, wobei die Stege 84 mit ihren Stirnflächen 87 miteinander verbunden sind. Auch sind Rohre 120 zu erkennen und die einlassseitigen beziehungsweise auslassseitigen Diffusoren 121, 122, die in den Einlassstutzen 112 beziehungsweise Auslassstutzen 113 münden.

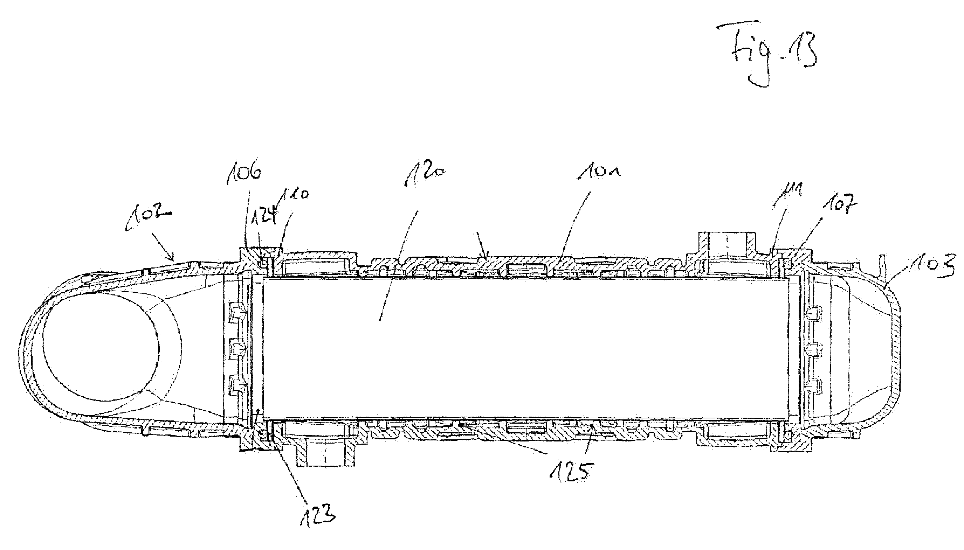

Die Figur 13 zeigt die Wärmeübertragereinheit in einem Schnitt gemäß der Linie B-B der Figur 11. Man erkennt ein Rohr 120 wie es im Gehäuse 101 aufgenommen ist. Der jeweilige Flansch 110, 111 überragt den Rohrboden 123 nach außen, wobei der Flansch 106, 107 der weiteren Gehäuseteile 102, 103 die Dichtung 124 aufnimmt und gegen den jeweiligen Rohrboden beaufschlagt und dichtet so zwischen dem Bereich des Kühlmittels, welches um die Rohre 120 strömt, und dem Bereich des Mediums, welches durch die Rohre strömt, ab. Weiterhin sind im Bereich des Gehäuses 101 die Stege 125 zu erkennen, die nach radial innen hervorstehen und sich vorteilhaft an dem Rohr oder an den Rohren am Randbereich abstützen. Dies bewirkt, dass das Kühlmittel durch die Stege 125 derart umgelenkt wird, dass eine verbesserte Umströmung der Rohre und damit auch ein verbesserter Wärmetausch erzielt werden.

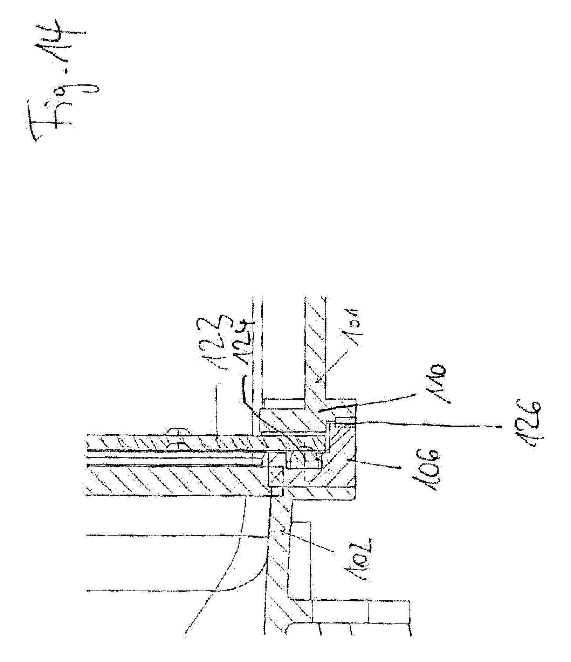

Die Figur 14 zeigt den Bereich der Rohrboden-Flansch-Verbindung der Figur 13 noch einmal in einem vergrößerten Detail. Der Ausschnitt zeigt das Gehäuse 101 mit dem Flansch 110, wobei das Gehäuseteil 102 mit seinem Flansch 106 derart angeordnet ist, dass die beiden Flansche 106 und 110 sich mit einem äußeren Bereich 126 berühren und dort beispielsweise durch Kleben oder Schweißen verbunden und abgedichtet sind. Darüber hinaus ragt der Rohrboden 123 zwischen den Flansch 110 und den Flansch 106, wobei zwischen dem Flansch 106 und dem Rohrboden 123 die Dichtung 124 aufgenommen ist. Dazu weist der Flansch 106 eine Aussparung auf, die rechteckig ausgebildet ist, wobei die Dichtung im Bereich der Aussparung aufgenommen wird.

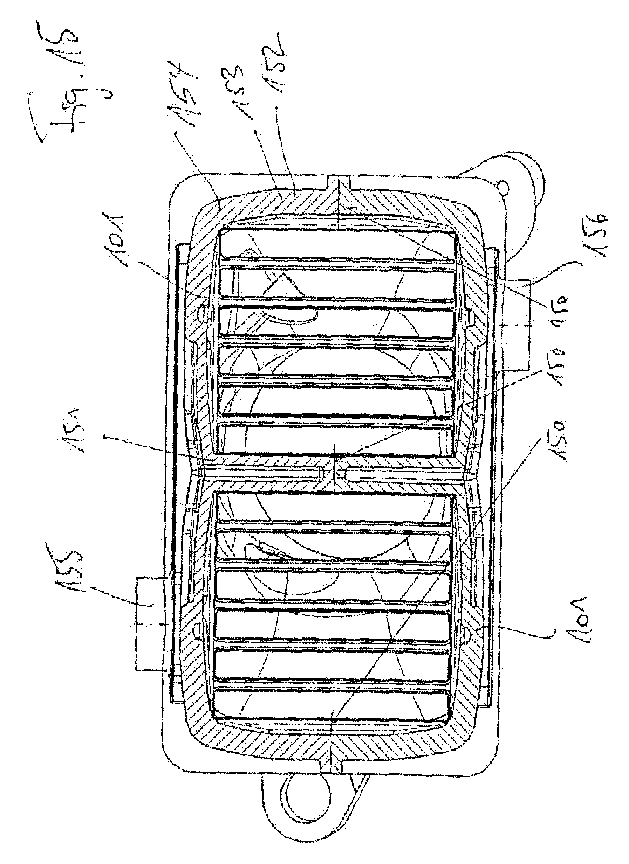

Die Figur 15 zeigt einen Schnitt des Wärmeübertragers gemäß der Verbindungslinie C-C der Figur 11. Dabei ist zu erkennen, dass die beiden Gehäuseelemente 101 an ihrer Berührfläche 150 aneinander liegen und dort miteinander verbunden sind.

Das Gehäuse ist durch die zentrale Trennwand 151 in einem mittigen Bereich unterteilt, wobei die zentrale Trennwand durch die rechteckigen Vorsprünge 84 gemäß Figur 7 gebildet werden und einen Zuganker bilden. Die Gehäuseform des Gehäuses 101 ist nicht streng rechteckig, sondern weist einen jeweils gewölbten Bereich 152 auf, der gebildet wird durch ein geraden zentralen Bereich und einen gewölbten Eckbereich 154. Dies bewirkt eine bessere Druckstabilität des Gehäuses.

Weiterhin sind Anschlussstutzen 155 und 156 zu erkennen, die an gegenüberliegenden Seitenwänden des Gehäuses angeordnet sind.

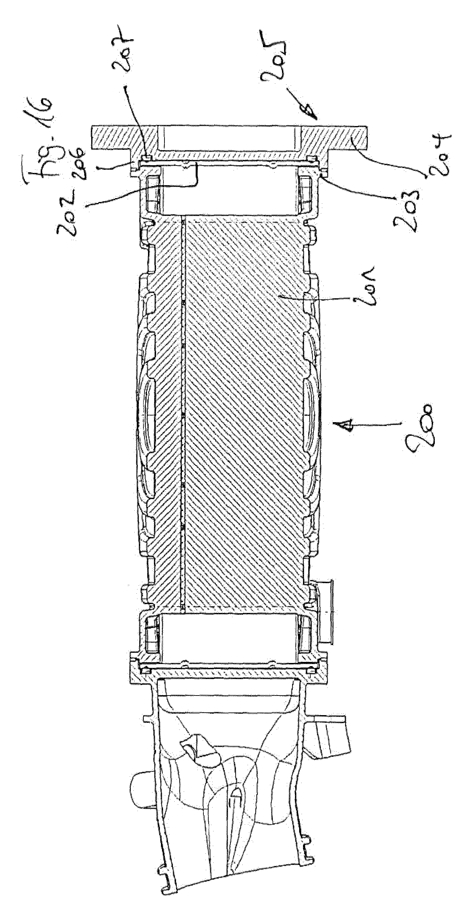

Die Figur 16 zeigt ein weiteres nicht-erfindungsgemäßes Ausführungsbeispiel, bei welchem der Wärmeübertrager 200 mit dem Gehäuse 201 ausgestattet ist. Das Gehäuse 201 weist einen Flansch 203 auf, der benachbart des Rohrbodens 202 angeordnet ist. Als weiteres Gehäuseteil 205 ist eine Art Flanschplatte vorgesehen, die einen Flansch 204 aufweist, insbesondere zur Befestigung an einem weiteren Bauteil im Verlauf des Fluidweges. Mit der Flanschplatte ist ein Flansch 206 in Kontakt mit dem Flansch 203 des Gehäuses, wobei die beiden Flansche dort miteinander verbunden und abgedichtet sind. Dabei ist der Rohrboden 202 zwischen dem Flansch 203 und dem Flansch 206 angeordnet und durch die Dichtung 207 abgedichtet.

## Patentansprüche

1. Wärmeübertrager (1), insbesondere Ladeluftkühler oder Abgaskühler, mit einer Rohr-Rohrboden-Baugruppe (2), bei welcher Rohre (5) mit ihren Rohrenden in Öffnungen zweier gegenüberliegender Rohrböden (3, 4) abgedichtet eingesetzt sind, wobei zwischen den beiden Rohrboden (3, 4) zumindest ein Teilbereich eines Gehäuses (8) angeordnet ist, welches die Rohre (5) der Baugruppe (2) umgreift und nach außen abdichtet, wobei die beiden Rohrböden (3, 4) zwei parallel zueinander verlaufende und jeweils an einen Endbereich (6, 7) der Rohre (5) anschließende Seiten aufweisen, an denen jeweils ein Gehäuseteil (15, 16) angeordnet ist, welches mit dem Gehäuse (8) verbunden ist, wobei an zumindest einem der Rohrböden (3, 4) eine Dichtung (30-33, 46-49) zwischen dem Gehäuse (8) und diesem Rohrboden (3, 4) und zwischen diesem Rohrboden (3, 4) und dem Gehäuseteil (15, 16), das an diesem Rohrboden (3, 4) angeordnet ist, abdichtend angeordnet ist.

2. Warmeübertrager nach Anspruch 1, **dadurch gekennzeichnet, dass** das Gehäuse (8) zwischen den beiden Rohrböden (3,4) aus zumindest zwei Gehauseelementen besteht, die miteinander fluiddicht verbunden sind.

3. Wärmeübertrager nach Anspruch 2, **dadurch gekennzeichnet, dass** das Gehäuse (8) aus zwei Schalen besteht, die die Baugruppe (2) jeweils zumindest teilweise umgreifen und die miteinander fluiddicht verbunden sind.

4. Wärmeübertrager (1) nach zumindest einem der vorhergehenden Ansprüche, **dadurch gekennzeichnet, dass** die Gehäuseelemente (9,10) des Gehäuses aus Metall oder Kunststoff bestehen und miteinander insbesondere durch Schweißen oder Kleben oder Löten verbunden sind.

5. Wärmeübertrager (1) nach einem der vorhergehenden Ansprüche, **dadurch gekennzeichnet, dass** das zumindest eine Gehäuseteil (15, 16) oder die Gehäuseteile (15, 16) aus Metall oder Kunststoff bestehen und durch Schweißen oder Kleben oder Löten mit dem Gehäuse (8) verbunden sind

6. Wärmeübertrager (1) nach einem der vorhergehenden Ansprüche, **dadurch gekennzeichnet, dass** das Gehäuse (8) an zumindest einem lateralen Ende gegenüber dem Rohrboden (3,4) einen Flansch aufweist, welcher den Rohrboden (3,4) seitlich überragt, wobei auch das zumindest eine Gehäuseteil (15, 16) an seinem einen lateralen Ende einen Flansch aufweist, welcher den Rohrboden (3, 4) seitlich überragt, wobei das Gehäuse (8) und das Gehäuseteil (15, 16) im Bereich der überragenden Flansche derart abgedichtet miteinander verbunden sind, dass der Rohrboden (3, 4) von dem Gehäuse (8) und dem Gehäuseteil (15, 16) aufgenommen ist.

7. Wärmeübertrager (1) nach Anspruch 6, **dadurch gekennzeichnet, dass** eine Dichtung (30-33, 46-49) zwischen dem Flansch des Gehäuses (8) und dem Rohrboden (3, 4) angeordnet ist zur Abdichtung des Innenraums des Gehäuses (8) gegenüber dem Innenraum des Gehäuseteils (15, 16).

8. Wärmeübertragers (1) nach Anspruch 6 oder 7, **dadurch gekennzeichnet, dass** eine Dichtung (30-33, 46-49) zwischen dem Flansch des Gehäuseteils (15, 16) und dem Rohrboden (3,4) angeordnet ist zur Abdichtung des Innenraums des Gehäuses (8) gegenüber dem Innenraum des Gehäuseteils.

9. Wärmeübertrager (1) nach Anspruch 6, 7 oder 8, **dadurch gekenntzeichnet, dass** zwei Dichtungen (30-33, 46-49) beiderseits des Rohrbodens (3,4) angeordnet sind.

10. Wärmeübertrager (1) nach einem der vorhergehenden Ansprüche, **dadurch gekennzeichnet, dass** zwischen den Rohren der Baugruppe (2) eine Aufnahme zum Durchgreifen zumindest eines Verbindungselements ist, welches oder welche zumindest zwei Gehäuseelemente miteinander verbindet bzw. verbinden.

## Claims

1. A heat exchanger (1), especially a charge-air cooler or exhaust-gas cooler, with a tube-to-tubesheet sub-assembly (2), in which tubes (5) are inserted in a sealed manner by their ends into openings of two oppositely-disposed tubesheets (3, 4), wherein at least one region of a housing (8) is arranged between the two tubesheets (3, 4) and encompasses and outwardly seals the tubes (5) of the sub-assembly (2), wherein the two tubesheets (3, 4) have two sides extending parallel to each other and adjoining an end region (6, 7) of the tubes (5) in each case, and on which is arranged in each case a housing section (15, 16) which is connected to the housing (8), wherein on at least one of the tubesheets (3, 4) a seal (30-33, 46-49) is arranged with sealing effect between the housing (8) and this tubesheet (3, 4) and between this tubesheet (3, 4) and the housing section (15, 16) which is arranged on this tubesheet (3, 4).

2. The heat exchanger (1) as claimed in claim 1, **characterised in that** the housing (8) between the two tubesheets (3, 4) consists of at least two housing elements which are interconnected in a fluid-tight manner.

3. The heat exchanger (1) as claimed in claim 2, **characterised in that** the housing (8) consists of two shells which in each case at least partially enclose the sub-assembly (2) and which are interconnected in a fluid-tight manner.

4. The heat exchanger (1) as claimed in at least one of the preceding claims, **characterised in that** the elements of the housing (9, 10) consist of metal or plastic and are interconnected especially by means of welding, or adhesive bonding, or soldering.

5. The heat exchanger (1) as claimed in one of the preceding claims, **characterised in that** the at least one housing section (15, 16) or the housing sections (15, 16) consist of metal or plastic and are connected to the housing (8) by means of welding, or adhesive bonding, or soldering.

6. The heat exchanger (1) as claimed in one of the preceding claims, **characterised in that** the housing (8), on at least one lateral end in relation to the tubesheet (3, 4), has a flange which projects laterally beyond the tubesheet (3, 4), wherein the at least one housing section (15, 16), on its one lateral end, also has a flange which projects laterally beyond the tubesheet (3, 4), wherein the housing (8) and the housing section (15, 16) in the region of the projecting flanges are interconnected in a sealed manner in such a way that the tubesheet (3, 4) is accommodated by the housing (8) and the housing section (15, 16).

7. The heat exchanger (1) as claimed in claim 6, **characterised in that** a seal (30-33, 46-49) is arranged between the flange of the housing (8) and the tubesheet (3, 4) for sealing the interior of the housing (8) in relation to the interior of the housing section (15, 16).

8. The heat exchanger (1) as claimed in claim 6 or 7, **characterised in that** a seal (30-33, 46-49) is arranged between the flange of the housing section (15, 16) and the tubesheet (3, 4) for sealing the interior of the housing (8) in relation to the interior of the housing section (15, 16).

9. The heat exchanger (1) as claimed in claim 6, 7 or 8, **characterised in that** two seals (30-33, 46-49) are arranged on both sides of the tubesheet (3, 4).

10. The heat exchanger (1) as claimed in one of the preceding claims, **characterised in that** there is an opening between the tubes of the sub-assembly (2) for penetration of at least one connecting element which interconnects, or interconnect, at least two housing elements.

## Revendications

1. Echangeur de chaleur (1), en particulier refroidisseur d'air de suralimentation ou refroidisseur de gaz d'échappement, comprenant un ensemble (2) de plateaux à tubes et de tubes, ensemble dans lequel des tubes (5) sont introduits de façon étanche par leurs extrémités tubulaires, dans des ouvertures de deux plateaux à tubes opposés (3, 4), où au moins une zone partielle d'un carter (8) est disposée entre les deux plateaux à tubes (3, 4), zone partielle qui entoure les tubes (5) de l'ensemble (2) et assure l'étanchéité vers l'extérieur, où les deux plateaux à tubes (3, 4) présentent deux côtés s'étendant parallèlement l'un à l'autre et se raccordant à chaque fois au niveau d'une zone d'extrémité (6, 7) des tubes (5), côtés sur lesquels est disposée à chaque fois une partie de carter (15, 16) qui est assemblée avec le carter (8), où un joint (30 - 33, 46 - 49) est disposé sur au moins l'un des plateaux à tubes (3, 4), en assurant l'étanchéité entre le carter (8) et ce plateau à tubes (3, 4), et entre ce plateau à tubes (3, 4) et la partie de carter (15, 16) qui est disposée sur ce plateau à tubes (3, 4).

2. Echangeur de chaleur selon la revendication 1, **caractérisé en ce que** le carter (8) placé entre les deux plateaux à tubes (3, 4) se compose au moins de deux éléments de carter qui sont assemblés l'un à l'autre de façon fluidiquement étanche.

3. Echangeur de chaleur (1) selon la revendication 2, **caractérisé en ce que** le carter (8) se compose de deux coques qui entourent à chaque fois au moins partiellement l'ensemble (2) et qui sont assemblées l'une à l'autre de façon fluidiquement étanche.

4. Echangeur de chaleur (1) selon au moins l'une quelconque des revendications précédentes, **caractérisé en ce que** les éléments de carter (9, 10) du carter sont en métal ou en matière plastique et sont assemblés l'un à l'autre, en particulier par soudage ou par collage ou par brasage.

5. Echangeur de chaleur (1) selon l'une quelconque des revendications précédentes, **caractérisé en ce que** la partie de carter (15, 16) au moins au nombre de un ou les parties de carter (15, 16) sont en métal ou en matière plastique et sont assemblées avec le carter (8), par soudage ou par collage ou par brasage.

6. Echangeur de chaleur (1) selon l'une quelconque des revendications précédentes, **caractérisé en ce que** le carter (8) présente une bride sur au moins une extrémité latérale par rapport au plateau à tubes (3, 4), bride qui dépasse latéralement du plateau à tubes (3, 4), où la partie de carter (15, 16) au moins au nombre de un présente aussi, sur l'une de ses extrémités latérales, une bride qui dépasse latéralement du plateau à tubes (3, 4), où le carter (8) et la partie de carter (15, 16) sont assemblés l'un à l'autre de façon étanche, dans la zone des brides saillantes, de manière telle que le plateau à tubes (3, 4) soit logé par le carter (8) et par la partie de carter (15, 16).

7. Echangeur de chaleur (1) selon la revendication 6, **caractérisé en ce qu'**un joint (30 - 33, 46 - 49) est disposé entre la bride du carter (8) et le plateau à tubes (3, 4), ledit joint servant à assurer l'étanchéité de l'espace intérieur du carter (8), par rapport à l'espace intérieur de la partie de carter (15, 16).

8. Echangeur de chaleur (1) selon la revendication 6 ou 7, **caractérisé en ce qu'**un joint (30 - 33, 46 - 49) est disposé entre la bride de la partie de carter (15, 16) et le plateau à tubes (3, 4), ledit joint servant à assurer l'étanchéité de l'espace intérieur du carter (8), par rapport à l'espace intérieur de la partie de carter (15, 16).

9. Echangeur de chaleur (1) selon la revendication 6, 7 ou 8, **caractérisé en ce que** deux joints (30 - 33, 46 - 49) sont disposés des deux côtés du plateau à tubes (3, 4).

10. Echangeur de chaleur (1) selon l'une quelconque des revendications précédentes, **caractérisé en ce qu'**un logement servant à la pénétration au moins d'un élément d'assemblage est disposé entre les tubes de l'ensemble (2), élément(s) d'assemblage qui assemble(nt) l'un à l'autre au moins deux éléments de carter.
